(19) Europäisches Patentamt

European Patent Office

Office européen des brevets

(11) **EP 1 056 251 A1**

(12) **EUROPEAN PATENT APPLICATION**
published in accordance with Art. 158(3) EPC

(43) Date of publication:
**29.11.2000 Bulletin 2000/48**

(51) Int. Cl.[7]: **H04L 27/34**, H03M 13/12

(21) Application number: **99902897.0**

(86) International application number:
**PCT/JP99/00623**

(22) Date of filing: **12.02.1999**

(87) International publication number:
**WO 99/41887 (19.08.1999 Gazette 1999/33)**

(84) Designated Contracting States:
**DE FR GB**

(30) Priority: **12.02.1998 JP 2994198**

(71) Applicant: **FUJITSU LIMITED
Kawasaki-shi, Kanagawa 211-8588 (JP)**

(72) Inventors:
• **KAKU, Takashi
FUJITSU LIMITED
Kawasaki-shi Kanagawa 211-8588 (JP)**

• **KAWADA, Noboru
FUJITSU LIMITED
Kawasaki-shi Kanagawa 211-8588 (JP)**
• **YAMAZAKI, Yuri
FUJITSU LIMITED
Kawasaki-shi Kanagawa 211-8588 (JP)**

(74) Representative:
**Wilding, Frances Ward
Haseltine Lake & Co
Imperial House
15-19 Kingsway
London WC2B 6UD (GB)**

(54) **MULTI-DIMENSIONAL CODING, AND METHOD AND DEVICE FOR THE CODE**

(57) Multidimensional coding with a bit count previously not practicable with a ROM is realized using a ROM of realistic size. Two-dimensional planes forming a multidimensional space are each divided into a plurality of areas. Using a ROM (20), multiple sets of area designation bits are generated from part of the information bits that are to be multidimensionally encoded. Area designating bits and intra-area signal point designating bits are combined together and sequentially given as an address to a ROM 24 a plurality of times, thereby sequentially generating two-dimensional signal points forming a multidimensional code.

Fig. 6

## Description

TECHNICAL FIELD

The present invention relates to a method and apparatus for multidimensional coding wherein a stream of information bits to be transmitted is mapped to a set of signal points selected so as to reduce an average power from among signal points in a multidimensional space formed by concatenating a plurality of two-dimensional planes each containing a plurality of signal points, and also relates to a method and apparatus for decoding the same.

BACKGROUND ART

Multidimensional coding has been known as a technique for transmitting as much information as possible over a band-limited channel such as a telephone line. In multidimensional coding, when transmitting information, for example, of n bits per signaling slot, a larger number of signal points than $2^n$, for example, $2^{n+1}$ signal points, are defined on a two-dimensional plane. Then, from among $2^{n+1} \times 2^{n+1} = 2^{2n+2}$ signal points located in a four-dimensional space formed, for example, by concatenating two such two-dimensional planes, $2^n \times 2^n = 2^{2n}$ signal points are selected, for example, in the order of increasing distance from the origin of the multidimensional space, starting from the one closest to the origin, in such a manner as to reduce the average power. The information of n bits per signaling slot is blocked as information of 2n bits in two signaling slots and mapped to the selected $2^{2n}$ signal points in the four-dimensional space. Four coordinates of each signal point in the four-dimensional space corresponding to the 2n-bit block are converted as two constituent sets of two-dimensional coordinates into a passband using a known quadrature amplitude modulation (QAM) before being transmitted onto a transmission channel.

A multidimensional code, compared with a two-dimensional code where each signaling slot is coded independently, can accommodate more information under the same average power and S/N ratio constraints because the average power can be reduced for the same signal point spacing, though the peak power increases.

Japanese Unexamined Patent Publication No. 61-248645 (U.S. Patent No. 4,713,817) discloses a method of implementing multidimensional coding with simple logic circuitry by dividing signal points in each two-dimensional plane into an inner group and an outer group according to the distance from the origin, and by defining a signal point in a four-dimensional space so that both of its corresponding signal points in the constituent two dimensional planes do not simultaneously fall within the outer group.

Encoding into a multidimensional code where signal points are arranged by meticulously considering the magnitude of the average power, for example, by selecting signal points in order of increasing distance from the origin, starting from the one closest to the origin, is difficult to implement with logic circuitry, and it is, therefore, convenient to use a read only memory (ROM). However, if the number of dimensions is increased to increase transmission capacity, the number of bits per block increases correspondingly; for example, in the case of a multidimensional code having $2^{27}$ signal points, a ROM with $2^{27}$ addresses would be needed, which is not realistic.

DISCLOSURE OF THE INVENTION

Accordingly, it is an object of the present invention to provide a method and apparatus for multidimensional coding that achieve higher transmission capacity by using a ROM of realistic size, and a method and apparatus for decoding the same.

According to the present invention, there is provided a multidimensional coding method in which blocks of information bits corresponding to a stream of information bits to be transmitted are each mapped to one of a limited number of signal points preselected from among $m^n$ signal points in a 2n-dimensional space formed by concatenating n two-dimensional planes each containing m signal points and, from each block, signal points in n successive two-dimensional planes, corresponding to the signal point in the 2n-dimensional space to which the block is mapped, are generated, each of the two-dimensional planes being divided into a plurality of areas each containing a plurality of signal points, the method comprising the steps of: converting a limited number of bits, preselected from among information bits forming each block, into n sets of area designation bits, each set designating for each of the n successive two-dimensional planes an area to which each of the signal points should belong; and sequentially reading out from a memory the signal points in the n two-dimensional planes by sequentially giving n addresses to the memory, the n addresses being obtained by combining the n sets of area designation bits with n sets of intra-area signal point designation bits consisting of the remaining bits of the information bits forming each block, each set designating one of the plurality of signal points within each of the areas.

According to the present invention, there is also provided a method for decoding a multidimensional code encoded by mapping each of blocks of information bits corresponding to a stream of information bits to be transmitted, to one of a limited number of signal points preselected from among $m^n$ signal points in a 2n-dimensional space formed by concatenating n two-dimensional planes each containing m signal points, and by generating, from each block, signal points in n successive two-dimensional planes corresponding to the signal point in the 2n-dimensional space to which the block is mapped, each of the two-dimensional planes being divided into a plurality of areas each containing a plurality of signal points, the method comprising the steps of: reconstructing the signal points in the n successive two-dimensional planes from a received signal; sequentially giving the n signal points as addresses to a memory, and thereby reading out from the memory n sets of area designation bits, each set designating an area to which each signal point belongs, and n sets of intra-area signal point designation bits consisting of part of the information bits forming the block, each set designating one of the plurality of signal points within the area; and converting the n sets of area designation bits into information bits as the remainder of the information bits forming the block.

According to the present invention, there is also provided a multidimensional coding apparatus in which blocks of information bits corresponding to a stream of information bits to be transmitted are each mapped to one of a limited number of signal points preselected from among $m^n$ signal points in a 2n-dimensional space formed by concatenating n two-dimensional planes each containing m signal points and, from each block, signal points in n successive two-dimensional planes, corresponding to the signal point in the 2n-dimensional space to which the block is mapped, are generated, each of the two-dimensional planes being divided into a plurality of areas each containing a plurality of signal points, the apparatus comprising: a bit converter which converts a limited number of bits, preselected from among information bits forming each block, into n sets of area designation bits, each set designating for each of the n successive two-dimensional planes an area to which each of the signal points should belong; and a memory which sequentially outputs the n signal points in the n two-dimensional planes when n addresses are sequentially given, the n addresses being obtained by combining the n sets of area designation bits with n sets of intra-area signal point designation bits consisting of the remaining bits of the information bits forming each block, each set designating one of the plurality of signal points within the area.

According to the present invention, there is also provided an apparatus for decoding a multidimensional code encoded by mapping each of blocks of information bits corresponding to a stream of information bits to be transmitted, to one of a limited number of signal points preselected from among $m^n$ signal points in a 2n-dimensional space formed by concatenating n two-dimensional planes each containing m signal points, and by generating, from each block, signal points in n successive two-dimensional planes corresponding to the signal point in the 2n-dimensional space to which the block is mapped, each of the two-dimensional planes being divided into a plurality of areas each containing a plurality of signal points, the apparatus comprising: means for reconstructing the signal points in the n successive two-dimensional planes from a received signal; a memory which, when the n signal points are sequentially given as addresses, outputs n sets of area designation bits, each set designating an area to which each signal point belongs, and n sets of intra-area signal point designation bits consisting of part of the information bits forming the block, each set designating one of the plurality of signal points within the area; and a bit converter which converts the n sets of area designation bits into information bits as the remainder of the information bits forming the block.

BRIEF DESCRIPTION OF THE DRAWINGS

Figure 1 is a block diagram showing, in simplified form, the configuration of a modem transmitter according to one embodiment of the present invention;
Figure 2 is a block diagram showing the detailed configuration of an encoder 10;
Figure 3 is a diagram for explaining area partitioning;
Figure 4 is a block diagram showing, in simplified form, the configuration of a modem receiver according to one embodiment of the present invention;
Figure 5 is a block diagram showing the detailed configuration of a decoder 38;
Figure 6 is a block diagram showing a modified example of the encoder of Figure 2;
Figure 7 is a block diagram showing a modified example of the decoder 38 of Figure 5;
Figure 8 is a diagram for explaining subset partitioning in trellis coding;
Figure 9 is a diagram showing an example of a multidimensional encoder according to the prior art; and
Figure 10 is a diagram showing an example of a decoder for decoding a multidimensional code according to the prior art.

BEST MODE FOR CARRYING OUT THE INVENTION

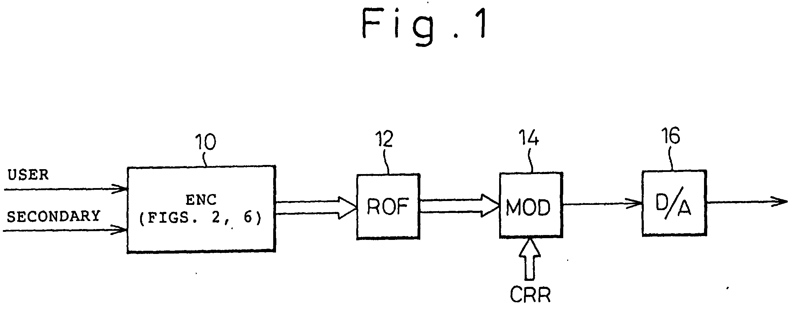

Figure 1 shows, in simplified form, the configuration of a modem transmitter according to one embodiment of the present invention. An encoder 10 receives user information plus secondary information for monitoring the line condition. In the encoder 10, the user information and secondary information are converted to a complex number indicating signal point location in a two-dimensional plane. A roll-off filter 12 limits the bandwidth, and a modulator 14 multiplies the signal by a carrier for conversion to a passband; the resultant signal is then converted by a D/A converter 16 into an analog signal which is transmitted out on a transmission channel.

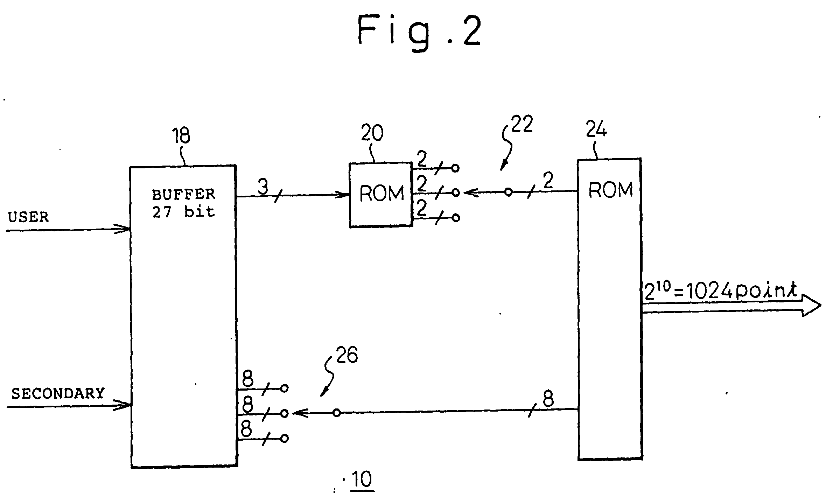

Figure 2 shows the detailed configuration of the encoder 10. As the user information + secondary information, information of 9 bits per signaling slot (for example, 6 bits for the user information and 3 bits for the secondary information), that is, information of 27 bits in three signaling slots, is input into a buffer 18 in the encoder 10. Of the 27 bits, 3 bits are converted in a ROM 20 into 6-bit area information, as described hereinafter.

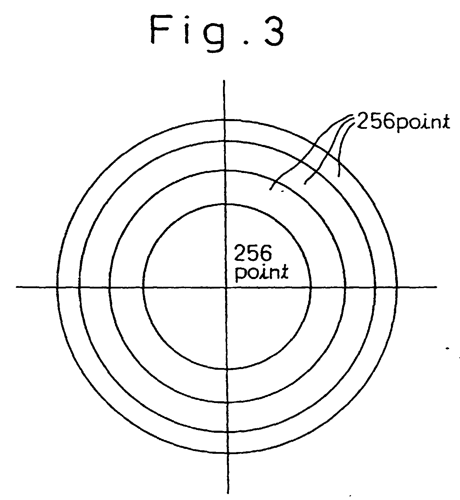

In the present embodiment, as shown, for example, in Figure 3, the two-dimensional plane where signal point locations are defined is divided into four areas by concentric circles centered about the origin, and preferably, the same number of signal points, for example, 256 signal points, are defined in each area. In accordance with the earlier described multidimensional coding technique, a six-dimensional space formed, for example, by concatenating three two-dimensional planes, each similar to the one shown in Figure 3, is assumed. Since each of the two-dimensional planes forming the six-dimensional space consists of four areas, there are $4 \times 4 \times 4 = 64$ possible combinations of areas in the six-dimensional space. Eight combinations are selected in advance from among the 64 possible combinations of areas. The selection criterion is, for example, as follows. The average value of the powers of the 256 signal points belonging to each area (the power represents the distance from the origin) is taken as the representative value of the power of that area. For each of the 64 combinations of areas, the sum of the representative power values of the areas is calculated, and eight combinations of areas are selected in increasing order of the sum, starting from the combination having the smallest sum. The above 3-bit information is mapped to one of the thus selected eight ($= 2^3$) combinations, and converted into $2 \times 3 = 6$ bits information designating one of the four areas contained in each of the three two-dimensional planes.

In this way, the ROM 20 in Figure 2 is used to convert the 3-bit information into 6-bit area information indicating one of the eight area combinations. The 6-bit information output from the ROM 20 is divided by a switch 22 into segments of two bits each and supplied, one segment at a time, as an address to a ROM 24. The reason that the 6-bit information is divided into three segments is that, as previously described, modulation is performed in two dimensions although the coding is multidimensional (six-dimensional). The remaining 24 bits are also grouped into three segments of 8 bits each, using a switch 26, and supplied, one segment at a time, as an address to the ROM 24. Each 2-bit address given to the ROM 24 is used to select one of the four areas, while each 8-bit address is used to select one of the 256 signal points contained in the selected area. Complex value (Re and Im) indicating each signal point is prestored in the ROM 24, and the complex value indicating the signal point specified by the supplied address is output.

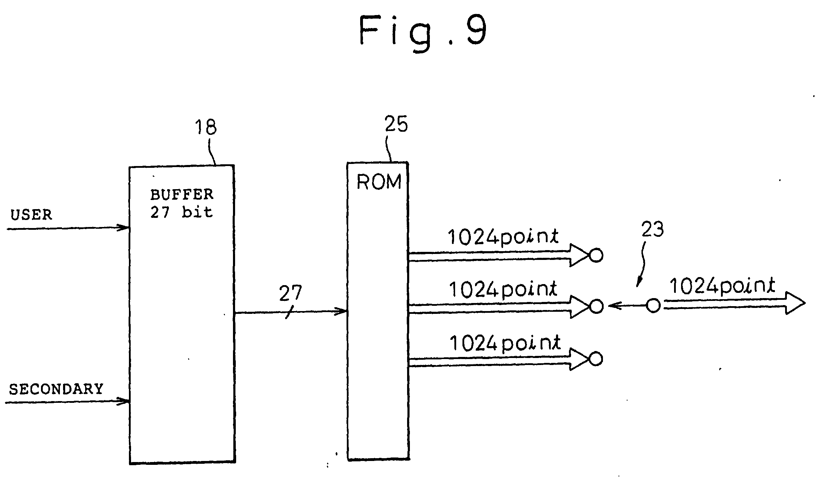

For comparison purposes, Figure 9 shows an example in which multidimensional coding is performed by supplying the 27 bits directly to the ROM without applying area partitioning. Since the complex values indicating the three signal points are output in parallel from the ROM 25, each output is sequentially selected by the switch 23. As shown in Figure 9, when the input is 27 bits, the ROM 25 used for multidimensional coding requires $2^{27} \fallingdotseq 1.34 \times 10^8$ addresses. In contrast, the ROM 24 of Figure 2 has $2^{10} = 1024$ addresses.

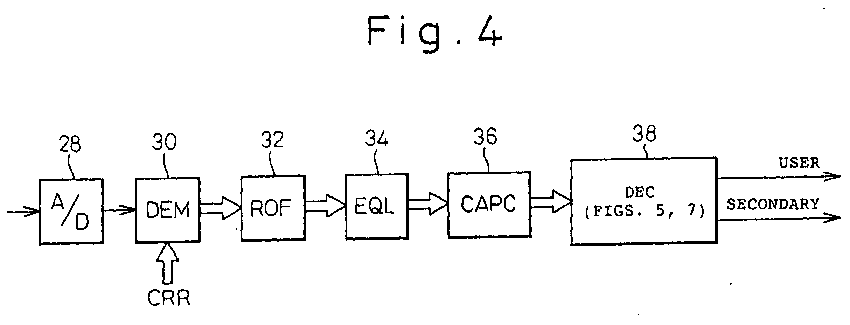

Figure 4 shows in simplified form the configuration of a modem receiver according to one embodiment of the present invention. The analog signal received from the transmission channel is converted by an A/D converter 28 into a digital value, which is then demodulated by a demodulator 30, waveshaped by a roll-off filter 32, equalized by an equalizer 34 to remove waveform distortion, corrected by a carrier automatic phase controller (CAPC) 36 for phase errors, and finally decoded by a decoder 38 to recover the user information and secondary information.

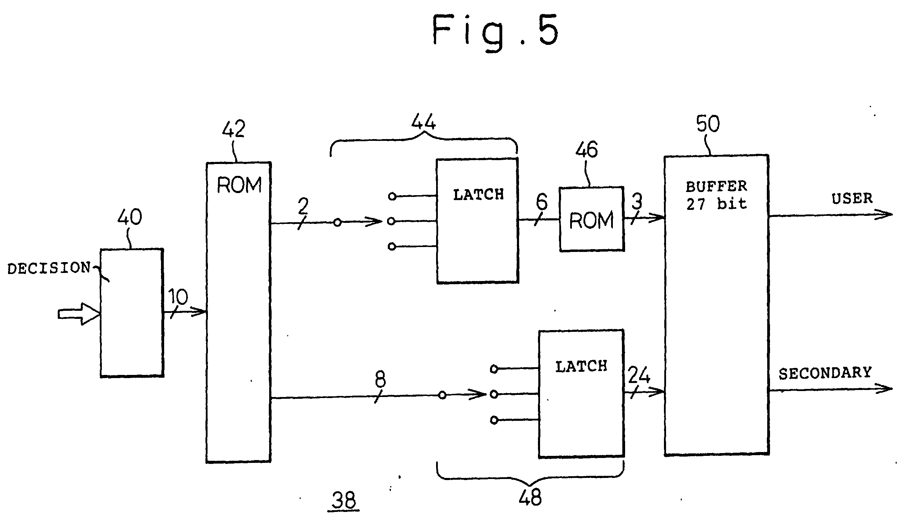

Figure 5 shows the detailed configuration of the decoder 38. The input baseband signal enters a decision device 40 where a decision is made to determine a signal point closest to the input value, and 10-bit information indicating one of the 1024 signal points in the two-dimensional plane is input to a ROM 42. The ROM 42 holds, at the memory location specified by the 10-bit address, 2-bit area information of the corresponding signal point and 8-bit information locating the signal point in the area, and outputs the 2-bit area information and 8-bit information in accordance with the address value thus input. The 2-bit information is paralleled over three signaling slots by a latch 44 and given as a 6-bit address to a ROM 46. The ROM 46 outputs 3-bit information in accordance with the address thus given. The 8-bit information output from the ROM 42 is paralleled over three signaling slots by a latch 48, and the resulting 24-bit information is combined with the 3-bit information to reconstruct the 27-bit information in a buffer 50. Here, the address/data relationship between the ROMs 46 and 42 in the decoder of Figure 5 is, as a matter of course, reversed from that between the ROMs 20 and 22 in the encoder of Figure 2.

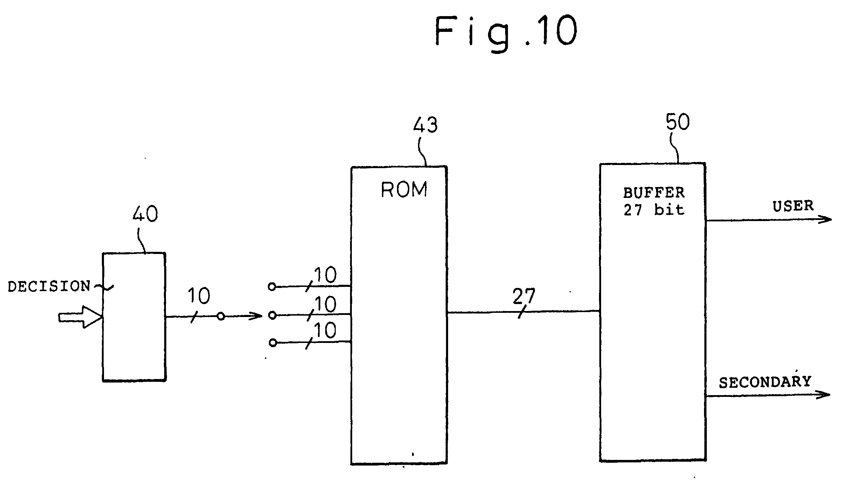

For comparison purposes, Figure 10 shows an example in which a multidimensional code generated without applying area partitioning is decoded. As shown in Figure 10, the ROM 43 used for decoding is supplied with a 30-bit address and thus requires $2^{30} \fallingdotseq 1.07 \times 10^{11}$ addresses. By contrast, the ROM 42 of Figure 5 has $2^{10} = 1024$ addresses.

It will be appreciated that the area partitioning technique described here is not limited to multidimensional coding, but can also be applied to two-dimensional coding.

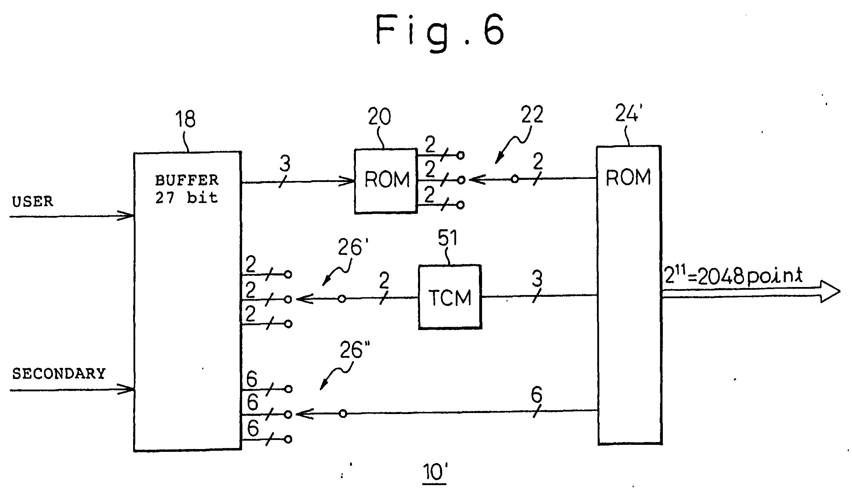

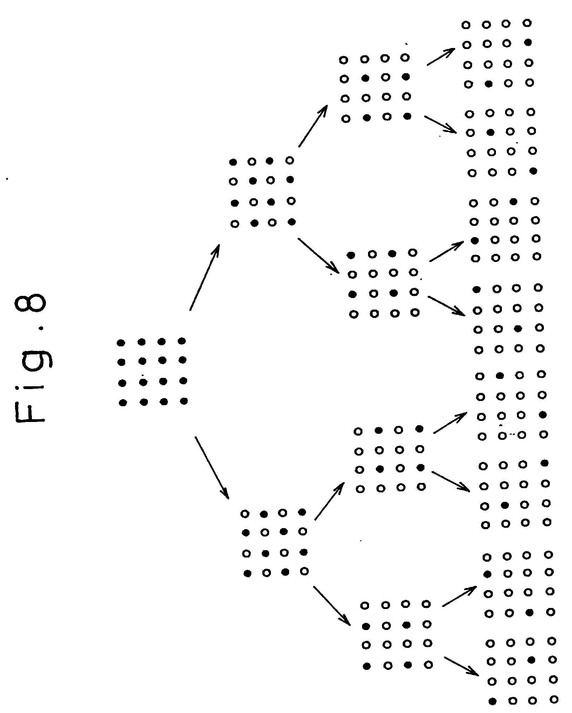

Figure 6 shows a modified example 10' of the encoder 10 of Figure 2. The same constituent elements as those in Figure 2 are designated by the same reference numerals, and a description of such elements will not be repeated here. In the example of Figure 6, the 24-bit portion of the 27-bit input, excluding the 3 bits used to generate the area information, is divided into 8-bit segments by signaling slot basis, and then the well known two-dimensional trellis coding hereinafter described is applied to each of the 8-bit segments. More specifically, 512 signal points, twice the necessary number, are defined in each of the four areas shown in Figure 3. The 512 signal points in each area are grouped into eight subsets each containing 64 signal points, by first dividing the area into two subsets, then subdividing each of the two subsets into two subsets, and finally subdividing each of the resulting two subsets into two subsets, thus partitioning the area three times, each time in such a manner that the minimum distance between any two signal points within each constituent subset is greater than the minimum distance between any two points within its parent set. Figure 8 shows in simplified form this subset partitioning process. To simplify the explanation, Figure 8 shows the case of 16-QAM consisting of 16 signal points. In Figure 8, at the first level of partitioning, the set of 16 signal points indicated by filled circles is divided into two subsets each containing eight filled circles. As can be seen from Figure 8, the minimum distance between signal points (filled circles) is increased by a factor of $\sqrt{2}$ by the partitioning. At the second level of partitioning, each subset containing eight filled circles is divided into two subsets each containing four filled circles. The minimum distance between signal points is increased by a factor of $\sqrt{2}$ by the partitioning. At the third level of partitioning, each subset containing four filled circles is further divided into two subsets each containing two filled circles, increasing the minimum distance between signal points by a factor of $\sqrt{2}$. Thus, the minimum distance between signal points is increased by a factor of $2\sqrt{2}$ through three levels of partitioning.

In the present embodiment, two bits in each 8-bit segment are encoded by a convolutional encoder 51 into a 3-bit convolutional code. In a ROM 24', the 3-bit convolutional code is used to select a subset, and the remaining 6 bits are used to select a signal point within the subset. As the effect of such trellis coding, though the necessary number of signal points is doubled, the transmission capacity increases because the distance between signal points can be made smaller.

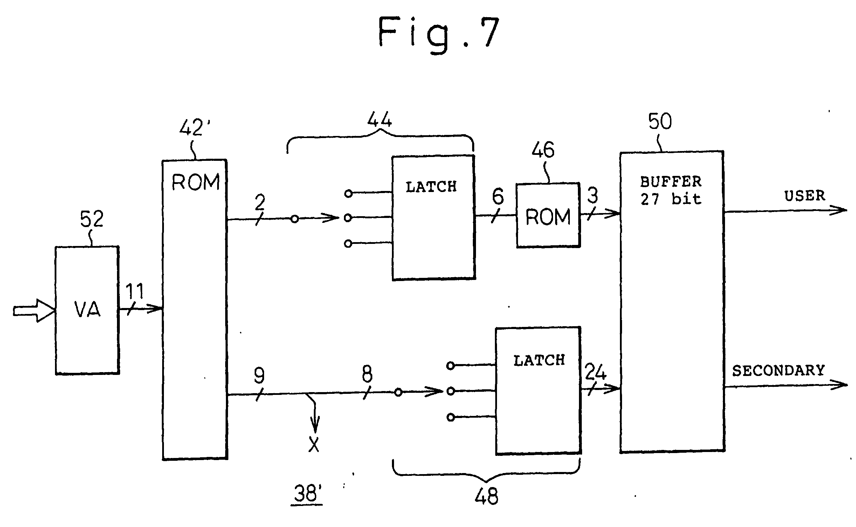

Figure 7 shows a modified example 38' of the decoder 38 of Figure 5. This decoder 38' is one that corresponds to the encoder 10' of Figure 6. A decision device 52 makes a soft decision, in accordance with the well known Viterbi algorithm, on the baseband signal, and outputs 11-bit information designating one of the 2048 signal points in the two-dimensional plane. A ROM 42' converts the 11-bit information designating the signal point into 2-bit area information and 9-bit information locating the signal point within the designated area. Of the 9 bits, one bit is a redundant bit and is, therefore, discarded as shown by "X" in Figure 7. The processing thereafter is the same as that in the decoder 38 of Figure 5, and will not be repeated here.

As described above, according to the present invention, multidimensional coding with a bit count previously not practicable with a ROM can be realized using a ROM of realistic size.

**Claims**

1. A multidimensional coding method in which blocks of information bits corresponding to a stream of information bits to be transmitted are each mapped to a signal point preselected from among $m^n$ signal points in a 2n-dimensional space formed by concatenating n two-dimensional planes each containing m signal points and, from each block, signal points in said n two-dimensional planes, corresponding to the signal point in said 2n-dimensional space to which said block is mapped, are generated,
   each of said two-dimensional planes being divided into a plurality of areas each containing a plurality of signal points, said method comprising the steps of:

   (a) converting a limited number of bits, preselected from among information bits forming each block, into n sets of area designation bits designating areas to which said signal points should belong in said two-dimensional planes; and
   (b) reading out from a memory said signal points in said two-dimensional planes by giving addresses to said memory, said addresses being obtained by combining said n sets of area designation bits with n sets of intra-area signal point designation bits consisting of the remaining bits of the information bits forming each block, each set of intra-area signal point designation bits designating one of said plurality of signal points within each of said areas.

2. A method according to claim 1, wherein said plurality of signal points contained in each of said plurality of areas are partitioned into a plurality of subsets in such a manner that the minimum distance between any two signal points within any subset is greater than the minimum distance between any two signal points within said each area.

3. A method according to claim 2, wherein each of said n sets of intra-area signal point designation bits consists of subset designation bits designating a subset to which said one signal point belongs and intra-subset signal point designation bits designating said one signal point in said designated subset, said subset designation bits including at least one redundant bit.

**4.** A method for decoding a multidimensional code encoded by mapping each of blocks of information bits corresponding to a stream of information bits to be transmitted, to one of a limited number of signal points preselected from among $m^n$ signal points in a 2n-dimensional space formed by concatenating n two-dimensional planes each containing m signal points, and by generating, from each block, signal points in n successive two-dimensional planes corresponding to the signal point in said 2n-dimensional space to which said block is mapped,

each of said two-dimensional planes being divided into a plurality of areas each containing a plurality of signal points, said method comprising the steps of:

(a) reconstructing said signal points in said n successive two-dimensional planes from a received signal;
(b) sequentially giving said n signal points as addresses to a memory, and thereby reading out from said memory n sets of area designation bits, each set designating an area to which each signal point belongs, and n sets of intra-area signal point designation bits consisting of part of the information bits forming said block, each set of intra-area signal point designation bits designating one of said plurality of signal points within said area; and
(c) converting said n sets of area designation bits into information bits as the remainder of the information bits-forming said block.

**5.** A method according to claim 4, wherein said plurality of signal points contained in each of said plurality of areas are partitioned into a plurality of subsets in such a manner that the minimum distance between any two signal points within any subset is greater than the minimum distance between any two signal points within said each area.

**6.** A method according to claim 5, wherein

each of said n sets of intra-area signal point designation bits consists of subset designation bits designating a subset to which said one signal point belongs and intra-subset signal point designation bits designating said one signal point in said designated subset, said subset designation bits including at least one redundant bit, and
in said step (a), said n signal points are reconstructed by maximum-likelihood decoding.

**7.** A multidimensional coding apparatus in which blocks of information bits corresponding to a stream of information bits to be transmitted are each mapped to one of a limited number of signal points preselected from among $m^n$ signal points in a 2n-dimensional space formed by concatenating n two-dimensional planes each containing m signal points and, from each block, signal points in n successive two-dimensional planes, corresponding to the signal point in said 2n-dimensional space to which said block is mapped, are generated,

each of said two-dimensional planes being divided into a plurality of areas each containing a plurality of signal points, said apparatus comprising:
a bit converter which converts a limited number of bits, preselected from among information bits forming each block, into n sets of area designation bits, each set designating for each of said n successive two-dimensional planes an area to which each of said signal points should belong; and
a memory which sequentially outputs said n signal points in said n two-dimensional planes when n addresses are sequentially given, said n addresses being obtained by combining said n sets of area designation bits with n sets of intra-area signal point designation bits consisting of the remaining bits of the information bits forming each block, each set of intra-area signal point designation bits designating one of said plurality of signal points within said area.

**8.** An apparatus according to claim 7, wherein said plurality of signal points contained in each of said plurality of areas are partitioned into a plurality of subsets in such a manner that the minimum distance between any two signal points within any subset is greater than the minimum distance between any two signal points within said each area.

**9.** An apparatus according to claim 8, wherein

each of said n sets of intra-area signal point designation bits consists of subset designation bits designating a subset to which said one signal point belongs and intra-subset signal point designation bits designating said one signal point in said designated subset, said subset designation bits including at least one redundant bit.

**10.** An apparatus for decoding a multidimensional code encoded by mapping each of blocks of information bits corresponding to a stream of information bits to be transmitted, to one of a limited number of signal points preselected from among $m^n$ signal points in a 2n-dimensional space formed by concatenating n two-dimensional planes each containing m signal points, and by generating, from each block, signal points in n successive two-dimensional planes corresponding to the signal point in said 2n-dimensional space to which said block is mapped,

each of said two-dimensional planes being divided into a plurality of areas each containing a plurality of signal points, said apparatus comprising:

means for reconstructing said signal points in said n successive two-dimensional planes from a received signal;

a memory which, when said n signal points are sequentially given as addresses, outputs n sets of area designation bits, each set designating an area to which each signal point belongs, and n sets of intra-area signal point designation bits consisting of part of the information bits forming said block, each set of intra-area signal point designation bits designating one of said plurality of signal points within said area; and

a bit converter which converts said n sets of area designation bits into information bits as the remainder of the information bits forming said block.

11. An apparatus according to claim 10, wherein said plurality of signal points contained in each of said plurality of areas are partitioned into a plurality of subsets in such a manner that the minimum distance between any two signal points within any subset is greater than the minimum distance between any two signal points within said each area.

12. An apparatus according to claim 11, wherein

each of said n sets of intra-area signal point designation bits consists of subset designation bits designating a subset to which said one signal point belongs and intra-subset signal point designation bits designating said one signal point in said designated subset, said subset designation bits including at least one redundant bit, and

said reconstruction means includes a Viterbi decoder for reconstructing said n signal points by maximum-likelihood decoding.

13. An encoding method for generating signal points arranged in an n-dimensional space based on a block consisting of a plurality of information bits to be transmitted, and for encoding said block, wherein

designated bits are extracted from said block and, based on said extracted bits, an area within said n-dimensional space to which a signal point should belong is determined, and

a signal point corresponding to said block, and to be arranged in said determined area, is selected based on the remaining bits of said block.

# Fig.1

EP 1 056 251 A1

# Fig.2

EP 1 056 251 A1

# Fig.3

256point

256
point

# Fig.4

A/D 28 → DEM 30 → ROF 32 → EQL 34 → CAPC 36 → DEC 38 (FIGS. 5, 7) → USER / SECONDARY

CRR

# Fig.5

EP 1 056 251 A1

# Fig.6

# Fig.7

EP 1 056 251 A1

Fig.8

# Fig.9

EP 1 056 251 A1

# Fig.10

DECISION → **40**

**43**
ROM

**50**
BUFFER
27 bit → USER

10
10
10
10

27

→ SECONDARY

# INTERNATIONAL SEARCH REPORT

International application No.

PCT/JP99/00623

| A. CLASSIFICATION OF SUBJECT MATTER |
|---|
| Int.Cl⁶ H04L27/34, H03M13/12 |

According to International Patent Classification (IPC) or to both national classification and IPC

| B. FIELDS SEARCHED |
|---|
| Minimum documentation searched (classification system followed by classification symbols)<br> Int.Cl⁶ H04L27/00-27/38, H03M13/12 |

Documentation searched other than minimum documentation to the extent that such documents are included in the fields searched
Jitsuyo Shinan Koho          1940-1999
Kokai Jitsuyo Shinan Koho    1971-1999

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP, 4-264852, A (American Telephone and Telegraph Co.),<br>21 September, 1992 (21. 09. 92),<br>Page 3, column 3, line 46 to page 9, column 16, line 1<br>& GB, 2249700, A & US, 5115453, A | 1-13 |
| A | JP, 3-18157, A (Codex Corp.),<br>25 January, 1991 (25. 01. 91)<br>& EP, 397536, A & CA, 2014867, A | 1-13 |
| A | JP, 59-205860, A (Codex Corp.),<br>21 November, 1984 (21. 11. 84)<br>& EP, 122805, A & US, 4597090, A | 1-13 |
| A | JP, 4-275747, A (American Telephone and Telegraph Co.),<br>1 October, 1992 (01. 10. 92)<br>& EP, 490551, A2 & US, 5195107, A | 1-13 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search<br> 6 May, 1999 (06. 05. 99) | Date of mailing of the international search report<br> 18 May, 1999 (18. 05. 99) |
|---|---|
| Name and mailing address of the ISA/<br> Japanese Patent Office | Authorized officer |
| Facsimile No. | Telephone No. |

Form PCT/ISA/210 (second sheet) (July 1992)

## INTERNATIONAL SEARCH REPORT

| International application No. |
| --- |
| PCT/JP99/00623 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP, 7-30592, A (AT&T Corp.),<br>31 January, 1995 (31. 01. 95)<br>& EP, 619666, A2 & US, 5418798, A | 1-13 |

Form PCT/ISA/210 (continuation of second sheet) (July 1992)